# EUROPÄISCHE PATENTSCHRIFT

(11) **EP 1 224 992 B1**
(45) Veröffentlichungstag und Bekanntmachung des Hinweises auf die Patenterteilung: **05.07.2006**
(21) Anmeldenummer: 02450007.6
(22) Anmeldetag: 17.01.2002
(51) Int. Cl.: B23B 27/00, B23B 27/14

(54) **Schneidwerkzeug und Wendeschneidplatte**
Cutting tool and indexable insert
Outil de coupe et plaquette amovible

(30) Priorität: 18.01.2001 AT 882001
(43) Veröffentlichungstag der Anmeldung: 24.07.2002
(73) Patentinhaber: Boehlerit GmbH & Co.KG., 8605 Kapfenberg (AT)
(72) Erfinder: Schlemmer, Armin, 8700 Leoben (AT); Melcher, Gerhard, 8130 Frohnleiten (AT)
(74) Vertreter: Wildhack, Helmut

(56) Entgegenhaltungen:
- CH-A- 477 249
- GB-A- 2 143 446
- US-A- 4 279 550
- US-A- 5 788 431
- US-A- 5 800 100

## Beschreibung

Die Erfindung betrifft eine Wendeschneidplatte für ein Schneidwerkzeug zur spanenden Bearbeitung von Werkstoffen, insbesondere Metallen und Legierungen, begrenzt durch eine ebene Auflagefläche, eine der Auflagefläche gegenüberliegende Spanfläche und Auflage- und Spanfläche verbindende Freiflächen, sowie mit einer gegebenenfalls als Mittelloch ausgebildeten Befestigungsmittelaufnahme, wobei in der Draufsicht der Wendeschneidplatte sechs Schneidkanten umfangbildend verlaufenund die Schneidkanten abwechselnd spitzwinkelige Ecken und stumpfwinkelige Ecken bilden und wobei der senkrechte Abstand der Schneldkanten zur Auflagefläche im Bereich der stumpfwlnkellgen Ecken ein Minimum aufweist.

Eine solche Wendeschneidplatte ist beispielsweise aus CH477249 bekannt. Bedingt durch eine zentrale sphärische Ausnehmung liegen dort jedoch gekrümmte Schneidkanten vor.

Schneidwerkzeuge, welche für verschiedene spanabhebende Bearbeitungen verwendbar sind, haben für die Herstellung von Werkstücken, insbesondere solchen aus Metall, im Anlagen- und Maschinenbau eine außerordentlich hohe technische und wirtschaftliche Bedeutung. In vergleichsweise kurzer Zeit ermöglichen derartige Schneidwerkzeuge die Herstellung einer Vielfalt von Werkstücken, vor allem solchen mit komplexen geometrischen Formen, und können dabei im wesentlichen hinreichende Maßgenauigkeit und Oberflächengüte sicherstellen. Dabei kann bei einem Durchführen mehrerer Bearbeitungsoperationen mit einem einzigen Schneidwerkzeug die Bearbeitungszeit gering gehalten werden, weil aufwendige Umrüstzeiten zur Auswechslung von Schneidwerkzeugen entfallen. Bei einer computergesteuerten maschinellen Bearbeitung von Teilen kann zusätzlich der Programmieraufwand wesentlich gesenkt werden.

Zur Erfüllung der Forderung nach wirtschaftlicher Effizienz wird bei Werkzeugen ein Erreichen einer möglichst hohen Standzeit im praktischen Einsatz gefordert. Aus diesem Grund werden bei Schneiclwerkzeugen umfänglich Schneidkanten aufweisende Schneideinsätze aus Sinterwerkstoffen eingesetzt. Der Verschleiß der Schneidkanten bzw. deren Einsatzdauer wird durch mehrere Faktoren, beispielsweise auch einer Verteilung von Kräften in der Schneidplatte beim Eingriff des in der Regel rotierenden Werkstückes und/oder der Kraftübertragung von der Schneidplatte auf den Grundkörper beeinflußt.

Bei der Herstellung von Werkstücken höchster Qualität sind eine entsprechend gesicherte Stabilität und eine geringe Vibrationsneigung des Werkzeuges bei gleichzeitig guter Schnittwirkung erforderlich.

Um weiters höchste Wirtschaftlichkeit und Oberflächengüte zu erreichen, sollen Schneidwerkzeuge vielfältige Bearbeitungsmöglichkeiten von Werkstücken zulassen, sowie einen möglichst geringen Werkzeugverschleiß, auch im Hochleistungsbetrieb, aufweisen, und zugleich eine gewünschte Maßgenauigkeit der abgespanten Flächen sicherstellen. Eine Realisierung einer solchen Kombination von Forderungen ist allerdings schwer erreichbar.

In der Offenlegungsschrift DE 2733705 wird ein mit einer Wendeschneidplatte bestücktes Schneidwerkzeug beschrieben, welches zum Bohren und Drehen geeignet ist und dessen Schneidplatte vier verwendbare Schneidkanten aufweist. Dabei befinden sich jeweils zwei Schneidkanten an der Ober- und Unterseite einer in Draufsicht annähernd rhombischen Wendeschneidplatte. Die Wendeschneidplatte ist derart ausgestaltet, daß durch ein Wenden ein Schneidkantenwechsel erfolgt, allerdings ist die Auflagefläche der Schneidplatte reduziert, wodurch die Stabilität und dadurch wiederum die erreichte Oberflächengüte wesentlich beeinträchtigt sein kann.

In EP 0642859 B1 wird ein weiteres Schneidwerkzeug zum Bohren ins Volle und Drehen vorgeschlagen. Selbiges Schneidwerkzeug besteht im wesentlichen aus einem Grundkörper und einer abwechselnd stumpfe und spitze Winkel aufweisenden, in Draufsicht rhombischen Wendeschneidplatte mit vier oberseitig liegenden, an den Ecken abgerundeten Schneidkanten, wobei die Schneidplatte mit dem Grundkörper derart verbunden ist, daß die stirnseitige Schneidkante in Draufsicht senkrecht zur Werkzeugdrehachse verläuft, nicht mehr als maximal 0.5° von der Senkrechten abweicht und am Obergang zur Eckenrundung nicht mehr als circa 10% über die Werkzeugdrehachse hinausreicht. Weiters ist vorgesehen, daß in Stirnansicht des Werkzeuges die Schneidkante die Bohrlängsachse schneidet oder einen maximalen Abstand von 2% des Bohrdurchmessers aufweist. Ein solches Schneidwerkzeug soll verbesserte Stabilität aufweisen und bei Sackbohrungen einen ebeneren Bohrungsgrund ermöglichen. Allerdings kann als nachteilig des für ein Bohren durchaus günstig einsetzbaren Werkzeuges angesehen werden, daß bei einem Drehen sowie insbesondere für ein Innendrehen und Senkfräsen mit größeren Abmessungen die größte Spanbreite auf den halben Durchmesser des Bearbeitungsabschnittes des Werkzeuges beschränkt ist. Weiters muß nach einem einmaligem Drehen der Wendeschneidplatte bei Schneidkantenabnutzung bzw. zur Schneidkantenerneuerung diese ersetzt werden.

Den bekannten Schneidwerkzeugen zum Bohren ins Volle und zum Drehen ist nachteilhaft gemein, daß mit ihnen nur Abspanungsbreiten erzielbar sind, die im wesentlichen der Länge der stirnseitigen Schneidkante und damit dem halben Durchmesser des Bearbeitungsteiles des Werkzeuges entsprechen. Ein Bohren außer Mitte erlaubt zwar gegebenenfalls eine geringfügige Erhöhung des Bohrdurchmessers, diese ist allerdings mit circa 10 % desselben beschränkt. Erfahrungsgemäß sind im Betrieb auch über dieses Maß hinausgehende variable Bohrungsdurchmesser gefordert, welche allerdings nur durch einen Einsatz von mehreren verschiedenen Schneidwerkzeugen oder durch eine aufwendige Bearbeitungstechnologie erzielt werden können. Damit ist ein erheblicher Arbeitszeitverlust verbunden.

Zusätzlich sind die aus dem Stand der Technik bekannten Schneidwerkzeuge derart gestaltet, daß in Draufsicht die Wendeschneidplatte nahezu vollständig auf einer Seite des Grundkörpers bzw. Bearbeitungsteiles des Werkzeuges zwischen Oberfläche und Drehachse aufgespannt ist. Die damit verursachte ungleichmäßige Verteilung von Kräften kann Schwingungen und Stabilitätsprobleme ergeben, wodurch einerseits die Standzeit der vier Schneidkanten reduziert und andererseits die Oberflächen- und Werkstückgüte nachteilig beeinflußt werden. Auch hat sich gezeigt, daß es bei Schneidwerkzeugen mit oberseitig liegenden Schneidkanten aufgrund der annähernd quadratischen Formen solcher Wendeschneidplatten leicht zu einer Fehlorientierung selbiger im Plattensitz und einer nachfolgenden falschen Befestigung kommen kann, insbesondere wenn Werkzeuabenutrer unter hohem Leistungsdruck stehen und dadurch oftmals hektische Arbeitsweise und Unachtsamkeit resultiert. Zwar wird versucht, durch zusätzlich angebrachte Kennzeichnungen auf solchen Wendeschneidplatten einer falschen Befestigung und den damit verbundene Gefahren für Mensch und Werkzeug vorzubeugen, ausgeschlossen können solche Gefahren aber nicht werden.

Die Erfindung will bezüglich vorstehend genannter Probleme Abhilfe schaffen und setzt sich zum Ziel, eine Wendeschneidplatte bereitzustellen, die für eine Verwendung in einem Schneidwerkzeug zum Bohren ins Volle mit variablen Durchmesser und zum Drehen geeignet ist und dabei eine hohe Standzeit aufweist:

Diese Aufgabe löst eine Wendeschneidplatte nach Anspruch 1.

Die Vorteile einer erfindungsgemäßen Wendeschneidplatte sind insbesondere darin zu sehen, daß sich durch deren Verwendung in einem Schneidwerkzeug variable Bohrungsdurchmesser beim Bohren außer der Mitte des Werkzeuges erreichen lassen und daß dabei durch die Verfügbarkeit von sechs benutzbaren Schneidkanten eine außerordentlich große Wirtschaftlichkeit gegeben ist. Dabei kann die abgewinkelte Schneidkante über die gesamte Breite der Wendeschneidplatte spanabhebend wirksam sein. Es können somit Bohrungen in Teile eingebracht werden, deren Durchmesser bis zum doppelten des Durchmessers des Arbeitsteiles des Schneidwerkzeuges reichen.

Da ein Bohren mit erhöhter Abspanungsbreite des Materials sowie dergleichen Drehoperationen möglich sind, können im Betrieb die Anzahl der Bearbeitungsschritte und/oder ein umständlicher Werkzeugwechsel vorteilhaft reduziert werden. Die erhöhte Funktionalität eines Schneidwerkzeuges mit einer erfindungsgemäßen Wendeschneidplatte bedingt daher auch den Effekt einer besseren Wirtschaftlichkeit.

Ein weiterer Vorteil ist darin zu sehen, dass gegenüber Wendeschneidplatten von bekannten Schneidwerkzeugen die Anzahl der Schneidkanten um zwei vergrößert Ist und somit die Standzeit bzw. das Abspanungsvolumen um zumindest 50 % erhöht sind. Dies ist auch auf eine bevorzugt größere Länge der Schneidkanten der Wendeschneidplatte zurückzuführen.

Neben obigen Vorteilen bietet eine erfindungsgemäße Wendeschneidplatte in günstiger Weise erhöhte Montagesicherheit. Mit Bezug auf die Lage der Schneidkanten sind durch die Symmetrie der Wendeschneidplatte zwar mehrere, aber nur gleichwertige Möglichkeiten zur Einpassung derselben im Plattensitz gegeben. Damit wird erreicht, daß auch bei hektischem Hantieren keine durch falsche Montage entstehende Sicherheitsgefahr auftritt.

In einer vorteilhaften Ausgestaltung schließen die Schneidkanten einer erfindungsgemäßen Wendeschneidplatte an den spitzwinkligen Ecken einen Winkel von 88° ± 0,5°, insbesondere von 88° ± 0.3° ein, wodurch insbesondere beim Bohren und Senkfräsen eine hohe Maßgenauigkeit bei einer Minimierung der Spantrennungsvibrationen erzielt werden kann.

Zur Erreichung einer hohen Schnittwirkung, kann es vorteilhaft sein, wenn die Schneidkanten einer erfindungsgemäßen Wendeschneidplatte zur Auflagefläche mit einem Winkel von 2° bis 10°, vorzugsweise 4° bis 8°, insbesondere von 7° ± 0.5° geneigt ausgebildet sind.

Die Schnittleistung kann gesteigert werden, wenn der unmittelbar an die Schneidkante angrenzende Teil der Spanfläche einer erfindungsgemäßen Wendeschneidplatte mit der Auflagefläche einen Winkel von 2°bis 18°, vorzugsweise 4° bis 12°, insbesondere von 5° bis 10°, einschließt. Dies entspricht einer besonders vorteilhaften Einstellung des Spanwinkels in bezug auf die Schnittwirkung und Spanabfuhr.

In weiterer vorteilhafter Ausgestaltung ist eine erfindungsgemäße Wendeschneidplatte durch Freiflächen gakennzeichnet, die in zumindest zwei Abschnitte unterteilt sind, deren erste, an die Schneidkanten angrenzende, einen Winkel von 5° bis 12°, vorzugsweise von 6° bis 11°, und insbesondere 7° 0.5°, und deren letzte, an die Auflagefläche angrenzende, einen Winkel von 12° bis 25°, vorzugsweise von 14° bis 22°, und insbesondere von 15° ± 0.5° mit einer zur Auflagefläche normalen Geraden einschließen. Durch diese Ausgestaltung wird ein besonders gutes Freigehen bei der Verwendung in einem Schneidwerkzeug zum Bohren und Drehen erreicht.

Zur Einstellung einer gewünschten Oberflächenrauhigkeit kann eine erfindungsgemäße Wendeschneidplatte abgerundete Ecken mit eingestelltem Eckenradius aufweisen.

Im Folgenden wird die Erfindung anhand von Abbildungen einer beispielhaften Ausführungsform näher erläutert. Es versteht sich hierbei, daß die näher erläuterte Ausführungsform lediglich einen Weg zur Verwirklichung der Erfindung darstellt.
Es zeigen:
Fig. 1: Ein Schneidwerkzeug in Draufsicht.
Fig. 2: Ein Schneidwerkzeug in Seitenansicht.
Fig. 3: Eine erfindungsgemäße Wendeschneidplatte in Stimansicht;
Fig. 4: Eine erfindungsgemäße Wendeschneidplatte in Draufsicht.
Fig. 5: Eine erfindungsgemäße Wendeschneidplatte in Seitenansicht.
Fig. 6: Den Schnitt entlang der Strecke AB in Fig. 4.
Fig. 7: Das Einbringen eines Bohrloches in ein Werkstück durch außermittiges Bohren mit einem Schneidwerkzeug mit einer erfindungsgemäßen Wendeschneidplatte;
Fig. 8: Das Einbringen einer Sackbohrung in ein Werkstück durch ein Schneidwerkzeug mit einer erfindungsgemäßen Wendeschneidplatte.

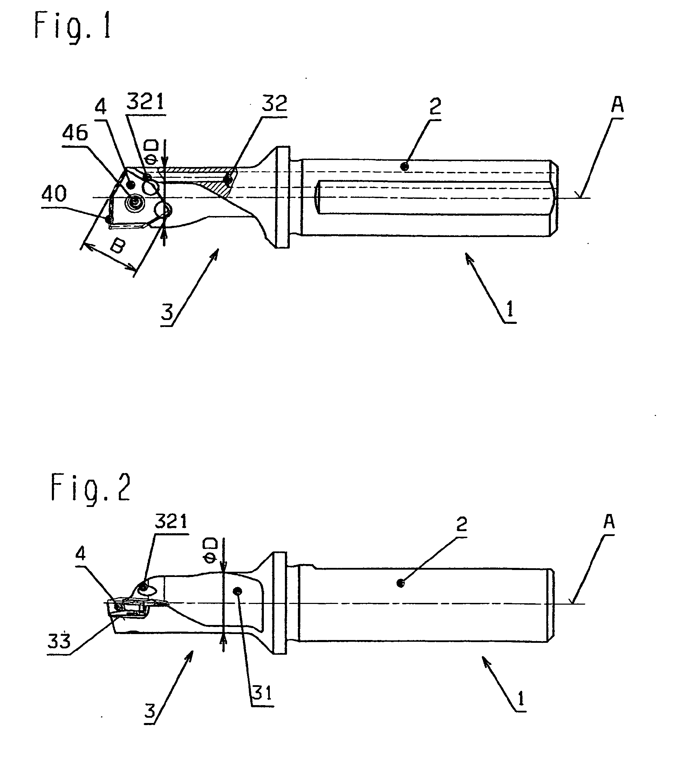

In Fig.1 ist beispielhaft ein Schneidwerkzeug mit einer erfindungsgemäßen Wendeschneidplatte (4) in Draufsicht dargestellt. Dieses Schneidwerkzeug besteht im wesentlichen aus einem Grundkörper (1) mit einem Einspannteil (2) und einem daran in Axrichtung anschließenden Arbeitsteil (3), wobei ein Kühlmittelkanal (32) den Grundkörper in Richtung der Drehachse (A) durchsetzt und Kühlmittel einem Austritt (321) zuführen kann, wodurch durch welchen Austritt (321) Kühlmittel den stirnseitigen Bereich des Arbeitsteils (3) zur Kühlung und/oder Spanabfuhr anströmen gelassen werden kann. Der Arbeitsteil (3) weist einen formschlüssigen Sitz (33) zur Aufnahme einer Wendeschneidplatte (4) auf. Dabei ist eine, in Draufsicht sechseckige Form mit abwechselnd stumpfen und spitzen Eckenwinkeln aufweisende, Wendeschneidplatte (4) im formschlüssigen Sitz (33) derart angebracht, daß die größte Abmessung der Wendeschneidplatte in der Breite (B) circa dem Durchmesser (D) des Arbeitsteiles (3) entspricht und drei Schneidkanten geringfügig überstehen. Eine aktive stimseitige Schneidkante (40) steht dabei in Draufsicht in einem Winkel von 90° zur Drehachse (A). Fig.2 stellt die Seitenansicht eines erfindungsgemäßen Schneidwerkzeuges dar. Die Ausbildung einer in Richtung der Drehachse (A) verlaufenden, gedrallten Spannut (31) ermöglicht eine vorteilhafte Spanabfuhr.

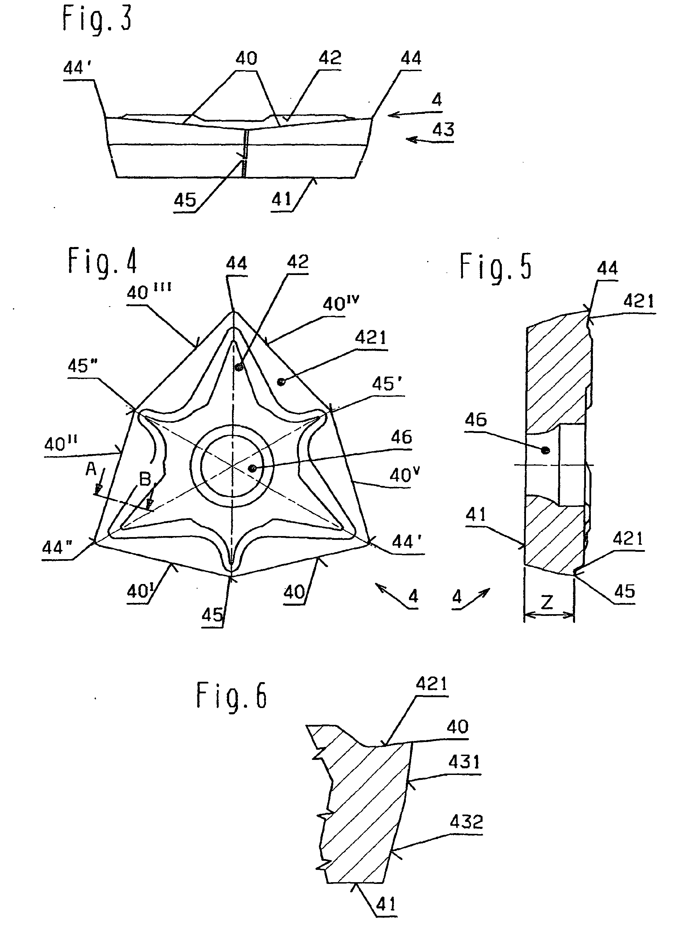

Fig. 3 zeigt beispielhaft die Stirnansicht einer erfindungsgemäßen Wendeschneidplatte (4), welche Wendeschneidplatte (4) durch eine ebene Auflagefläche (41), einer der Auflagefläche (41) gegenüberliegende Spanfläche (42) und Auflagefläche (41) und Spanfläche (42) verbindende Freiflächen (43) gebildet wird. In Fig. 4 ist die Draufsicht einer erfindungsgemäßen Wendeschneidplatte (4) abgebildet. Die Wendeschneidplatte (4) weist gerade Schneidkanten (40,40^{I}, 40^{II}, 40^{III}, 40^{VI}, 40^{V}) auf, welche in Draufsicht abwechselnd spitzwinklige Ecken (44, 44', 44") und stumpfwinklige Ecken (45, 45', 45") einschließen und deren senkrechter Abstand zur Auflagefläche im Bereich der stumpfwinkligen Ecken (45, 45', 45") ein Minimum aufweist. Fig. 5 zeigt eine entsprechende Seitenansicht. Eine als Mittelloch (46) ausgebildete Befestigungsmittelaufnahme durchsetzt die Wendeschneidplatte (4), wodurch die Aufnahme einer Schraube ermöglicht wird. In Fig. 6 ist ein Schnitt entlang der in Fig. 4 ausgewiesenen Strecke AB gezeigt. Der schneidkantennahe Teil (421) der Spanfläche (42) ist gegenüber der Auflagefläche (41) geneigt, wodurch eine gute Schnittwirkung bei der Verwendung in einem Schneidwerkzeug erreicht werden kann.

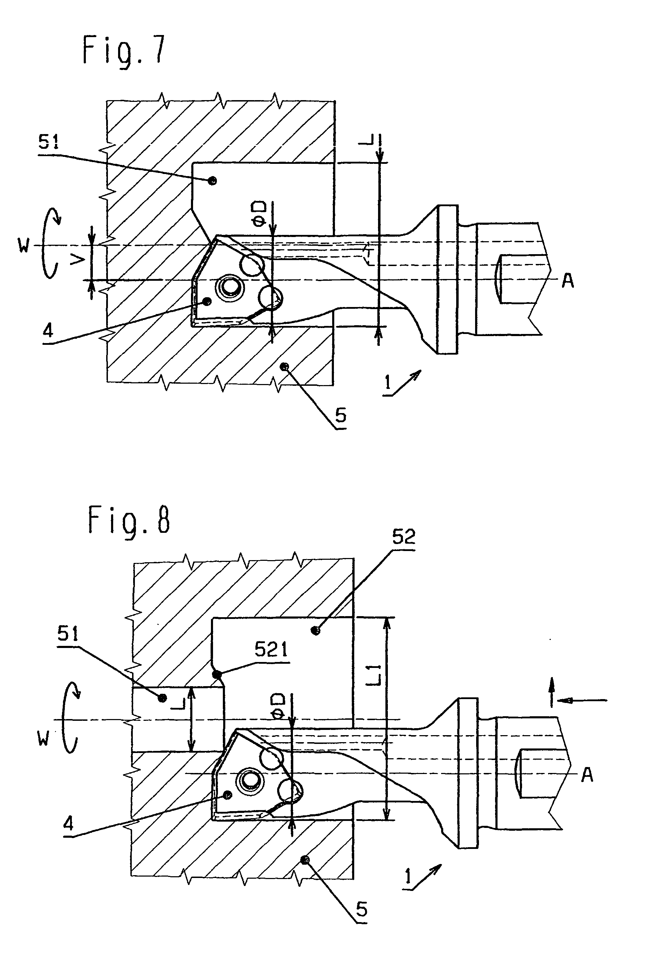

Fig. 7 zeigt eine beispielhafte Anwendung eines Schneidwerkzeuges (1) mit einer erfindungsgemäßen Wendeschneidplatte (4) betreffend einer Bohreinbringung (51) in ein Werkstück (5). Das um eine Werkstückachse (W) rotierende Werkstück (5) wird geradlinig vorwärts in Richtung des Schneidwerkzeuges (1) bewegt, wodurch durch das Schneidwerkzeug (1) Späne vom Werkstück (5) abgetrennt werden. Dabei wird der Durchmesser (L) der Bohreinbringung (51) im wesentlichen durch den Versatz (V) der Werkstückachse (W) und der Drehachse (A) des Schneidwerkzeuges (1) bestimmt. In Fig. 8 ist in beispielhafter Weise eine weitere Anwendung eines solchen Schneidwerkzeuges (1) illustriert. In einem Werkstück (5) mit eingebrachter Bohrung (51) mit einem ersten Durchmesser (L) kann eine ebene Sackbohrung in einfacher Weise dadurch erreicht werden, daß durch außermittiges Bohren eine Bohrung mit einem Durchmesser (L1), welcher Durchmesser (L1) größer ist als der erste Durchmesser (L), eingebracht wird und nachfolgend der Lochzapfen (521) der zweiten Bohrung (52) durch Drehen abgetrennt wird.

## Patentansprüche

1. Wendeschneidplatte (4) für ein Schneidwerkzeug zur spanenden Bearbeitung von Werkstoffen, insbesondere Metallen und Legierungen, begrenzt durch eine ebene Auflagefläche (41), eine der Auflagefläche (41) gegenüberliegende Spanfläche (42) und Auflage- und Spanfläche verbindende Freiflächen (43), sowie mit einer gegebenenfalls als Mittelloch ausgebildeten Befestigungsmittelaufnahme (46), wobei in der Draufsicht der Wendeschneidplatte sechs Schneidkanten umfangbildend verlaufen und die Schneidkanten (40, 40^{I}, 40^{II}, 40^{III}, 40^{VI}, 40^{V}) abwechselnd spitzwinklige Ecken (44, 44', 44") und stumpfwinklige Ecken (45, 45', 45") bilden und wobei der senkrechte Abstand der Schneidkanten zur Auflagefläche (41) im Bereich der stumpfwinkligen Ecken (45, 45', 45") ein Minimum aufweist, **dadurch gekennzeichnet, daß** die Schneidkanten gerade ausgebildet sind und an den spitzwinkligen Ecken (44, 44', 44") einen Winkel von 88° ± 1.7° einschließen.

2. Wendeschneidplatte nach Anspruch 1, **dadurch gekennzeichnet, daß** die Schneidkanten an den spitzwinkligen Ecken (44, 44', 44") einen Winkel von 88° ± 0.5°, insbesondere von 8°± 0.3° einschließen.

3. Wendeschneidplatte nach einem der Ansprüche 1 oder 2, **dadurch gekennzeichnet, daß** die Schneidkanten (40) zur Auflagefläche mit einem Winkel von 2° bis 10°, vorzugsweise 4° bis 8°, insbesondere von 7° ± 0.5° geneigt ausgebildet sind.

4. Wendeschneidplatte nach einem der Ansprüche 1 bis 3, **dadurch gekennzeichnet,** der unmittelbar an die Schneidkante angrenzende Teil der Spanfläche (421) mit der Auflagefläche (41) einen Winkel von 2° bis 18°, vorzugsweise 4° bis 12°, insbesondere von 5° bis 10°, einschließt.

5. Wendeschneidplatte nach einem der Ansprüch 1 bis 4, **dadurch gekennzeichnet, daß** die Freiflächen (43) an den Schneidkanten (40, 40^{I}, 40^{II}, 40^{III}, 40^{VI}, 40^{V}) mit einer zur Auflagefläche (41) normalen Geraden einen Winkel von 5° bis 12°, vorzugsweise von 6° bis 11°, und insbesondere 7°± 0.5° einschließen.

6. Wendeschneidplatte nach einem der Ansprüche 1 bis 5, **dadurch gekennzeichnet, daß** die Freiflächen (43) in zumindest zwei Abschnitte (431, 432) unterteilt sind, deren erste (431), an die Schneidkanten angrenzende, einen Winkel von 5° bis 12°, vorzugsweise von 6° bis 11°, und insbesondere 7° ± 0.5°, und deren letzte (432), an die Auflagefläche (41) angrenzende, einen Winkel von 12° bis 25°, vorzugsweise von 14° bis 22°, und insbesondere von 15° ± 0.5° mit einer zur Auflagefläche (41) normalen Geraden einschließen.

7. Wendeschneidplatte nach einem der Ansprüche 1 bis 6, **dadurch gekennzeichnet, daß** die Ecken (44, 44', 44", 45, 45', 45") der Wendeschneidplatte abgerundet sind.

8. Verwendung einer Wendeschneidplatte nach einem der Ansprüche 1 bis 7 in einem Schneidwerkzeug zum Bohren und Drehen.

9. Verwendung einer Wendescheidplatte nach Anspruch 8, wobei das Schneidwerkzeug einen mindestens eine Kühlmittelbohrung aufweisenden Grundkörper mit einem Einspannteil und einem daran in eine Achsrichtung anschließenden, im wesentlichen zylindrisch ausgeformten Arbeitsteil umfasst, wobei der Arbeitsteil eine in Richtung einer Werkzeugachse verlaufende Spannut und einen formschlüssig wirkenden Sitz für die Wendeschneidplatte dergestalt aufweist, dass die Wendeschneidplatte mit Schneidkanten geringfügig überstehen kann und eine größte Breite der Wendeschneidplatte mindestens 0.92 mal dem Durchmesser des Arbeitsteiles beträgt.

## Claims

1. Indexable knife insert (4) for a cutting tool for machining materials, particularly metals and alloys, which is defined by a flat contact surface (41), a true rake surface (42) opposite said contact surface (41) and by free surfaces (43) interconnecting said contact surface and said true rake surface, and comprising a fastening means uptake (46), optionally formed as a centre hole, wherein, in a plan view of said indexable knife insert, six cutting edges extend so as to form its periphery, said cutting edges (40, 40^{I} 40^{II}, 40^{III}, 40^{IV}, 40^{V}) forming alternately acute-angled corners (44, 44', 44") and obtuse-angled corners (45, 45', 45"), and wherein the perpendicular distance of said cutting edges to said contact surface (41) has a minimum in the region of said obtuse-angled corners (45, 45', 45"), **characterised in that** the said cutting edges are straight and form an angle of 88 ± 1.7° at the acute-angles corners (44, 44', 44").

2. Indexable knife insert according to claim 1, **characterised in that** the cutting edges, at the cutting edges, at the acute-angled corners (44, 44', 44"), form an angle of 88° ± 0.5°, particularly of 88° ± 0.3°.

3. Indexable knife insert according to claim 1 or 2, **characterised in that** the cutting edges (40) are inclined to the contact surface under an angle of 2° to 10°, preferably of 4° to 8°, particularly of 7° ± 0.5°.

4. Indexable knife insert according to any of claims 1 to 3, **characterised in that that** part of the true rake surface (42), which directly joins said cutting edge, forms an angle of 2° to 18°, preferably of 4° to 12°, particularly of 5° to 10°, with said contact surface (41).

5. Indexable knife insert according to any of claims 1 to 4, **characterised in that** said free surfaces (43), at the cutting edges (40, 40^{I}, 40^{II}, 40^{III}, 40^{IV}, 40^{V}), form an angle of 5° to 12°, preferably of 6° to 11°, and particularly of 7° ± 0.5°, with a straight line perpendicular to said contact surface (41).

6. Indexable knife insert according to any of claims 1 to 5, **characterised in that** said free surfaces (43) are subdivided into at least two sections (431, 432), the first of which, that joins the cutting edges, forms an angle of 5° to 12°, preferably of 6° to 11°, and particularly 7° ± 0.5°, to a straight line perpendicular to the contact surface (41), while the latter (432) of them, joining the contact surface (41), forms an angle of 12° to 25°, preferably of 14° to 22°, and particularly of 15° ± 0.5° with it.

7. Indexable knife insert according to any of claims 1 to 6, **characterised in that** the corners (44, 44', 44", 45, 45', 45") of said indexable knife insert are rounded.

8. The use of an indexable knife insert according to any of claims 1 to 7 in a cutting tool for boring and turning.

9. The use of an indexable knife insert according to claim 8, wherein said cutting tool comprises a base body including at least one borehole for a cooling medium, a clamping portion, and a substantially cylindrically shaped machining portion, which joins it in axial direction, said machining portion including a chip groove, that extends in the direction of the tool axis, and a positive acting seat for said indexable knife insert in such a way that said indexable knife insert with its cutting edges may be a bit salient, and the maximum width of the indexable knife insert amounts to at least 0.92 times the diameter of the machining portion.

## Revendications

1. Plaquette amovible (4) pour un outil de coupe pour l'usinage des matériaux, particulièrement des métaux et des alliages, qui est délimitée par une surface d'appui plate (41), une face de coupe (42) opposée à la surface d'appui (41), et des surfaces libres (43), qui relient la surface d'appui et la face de coupe, ainsi qu'avec un logement d'un moyen de fixation (46), formé le cas échéant comme trou central, six arêtes coupantes, qui, vu d'en haut de la plaquette amovible, s'étendant de sorte à former la périphérie, où les arêtes coupantes (40, 40', 40^{II}, 40^{III}, 40^{IV}, 40^{V}) forment, en alternance, des coins à angle aigu (44, 44', 44") et des coins à angle obtus (45, 45', 45"), et dans laquelle la distance perpendiculaire des arêtes coupantes à la surface d'appui (41) a un minimum dans la région des coins à angle obtus (45, 45', 45"), **caractérisée en ce, que** les arêtes coupantes sont formées d'une façon rectiligne, et qu'elles forment un angle de 88° ± 1,7° aux coins à angle aigu (44, 44', 44").

2. Plaquette amovible selon la revendication 1, **caractérisée en ce, que** les arêtes coupantes forment un angle de 88° ± 0,5°, particulièrement de 88° ± 0,3° aux coins à angle aigu (44, 44', 44").

3. Plaquette amovible selon une quelconque des revendications 1 ou 2, **caractérisée en ce, que** les arêtes coupantes (40) sont formées d'une façon inclinée par rapport à la surface d'appui sous un angle de 2° à 10°, préférablement de 4° à 8°, et particulièrement de 7° ± 0,5°.

4. Plaquette amovible selon une quelconque des revendications 1 à 3, **caractérisée en ce, que** la partie de la face de coupe (42), qui est directement adjacente à l'arête coupante, forme un angle de 2° à 18°, préférablement de 4° à 12°, et particulièrement de 5° à 10°, avec la surface d'appui (41).

5. Plaquette amovible selon une quelconque des revendications 1 à 4, **caractérisée en ce, que** les surfaces libres (43), aux arêtes coupantes (40, 40^{I}, 40^{II}, 40^{III}, 40^{IV}, 40^{V}) forment un angle de 5° à 12°, préférablement de 6° à 11°, et particulièrement de 7° ± 0,5°, avec une ligne droite perpendiculaire à la surface d'appui (41).

6. Plaquette amovible selon une quelconque des revendications 1 à 5, **caractérisée en ce, que** les surfaces libres (43) sont divisées en au moins deux sections (431, 432), dont la première (431), adjacente aux arêtes coupantes, forme un angle de 5° à 12°, préférablement de 6° à 11 °, et particulièrement de 7° ± 0,5°, et dont la dernière (432), adjacente à la surface d'appui (41), forme un angle de 12° à 25°, préférablement de 14° à 22°, et particulièrement de 15° ± 0,5°, avec une ligne droite perpendiculaire à la surface d'appui (41).

7. Plaquette amovible selon une quelconque des revendications 1 à 6, **caractérisée en ce, que** les coins (44, 44', 44", 45, 45', 45") de la plaquette amovible sont arrondis.

8. L'utilisation d'une plaquette amovible selon une quelconque des revendications 1 à 7 dans un outil de coupe pour le forage et le tournage.

9. L'utilisation d'une plaquette amovible selon la revendication 8, dans laquelle l'outil de coupe comprend un corps de base, qui présente au moins une alésage à réfrigérant et a une partie de fixation et une partie d'usinage, qui se joint à celle-ci en direction axiale et a essentiellement une forme cylindrique, ladite partie d'usinage comprenant une rainure à copeaux, qui s'étend en direction de l'axe de l'outil, et un logement agissant d'une forme clabotée pour la plaquette amovible d'une manière, que la plaquette amovible est capable de faire légèrement saillie avec les arêtes coupantes, la largeur maximale de la plaquette amovible se montant au moins à 0,92 fois le diamètre de la partie d'usinage.
